(19) Europäisches Patentamt / European Patent Office / Office européen des brevets

(11) **EP 0 829 548 B1**

(12) **EUROPÄISCHE PATENTSCHRIFT**

(45) Veröffentlichungstag und Bekanntmachung des Hinweises auf die Patenterteilung:
**18.01.2012 Patentblatt 2012/03**

(51) Int Cl.:
*C21D 11/00* (2006.01)     *C21D 9/573* (2006.01)
*C21D 1/84* (2006.01)     *G05B 17/00* (2006.01)

(21) Anmeldenummer: **97250263.7**

(22) Anmeldetag: **10.09.1997**

(54) **Modellgestütztes Verfahren zur kontrollierten Kühlung von Warmband oder Grobblech in einem rechnergeführten Walz- und Kühlprozess**

Model supported process for controlled cooling of hot rolled strip or thick plate in a computer controlled rolling and cooling process

Procédé de refroidissement contrôlé de bandes laminés à chaud ou de tôles fortes à l'aide d'un modèle dans un procédé de laminage et refroidissement contrôle par ordinateur

(84) Benannte Vertragsstaaten:
**AT DE FI FR GB IT SE**

(30) Priorität: **16.09.1996 DE 19639062**

(43) Veröffentlichungstag der Anmeldung:
**18.03.1998 Patentblatt 1998/12**

(73) Patentinhaber: **SMS Siemag AG**
**40237 Düsseldorf (DE)**

(72) Erfinder:
• **Elfmark, Jiri, Prof. Dr. Sc.**
**70800 Ostrava-Poruba (CZ)**
• **Tischner, Christoph, Dipl.-Ing.**
**40878 Ratingen (DE)**
• **Plociennik, Christian, Dipl.-Ing.**
**40885 Ratingen (DE)**
• **Dehmel, Roman, Dr.-Ing.**
**41515 Grevenbroich (DE)**

(74) Vertreter: **Meissner, Peter E. et al**
**Meissner & Meissner**
**Patentanwaltsbüro**
**Postfach 33 01 30**
**14171 Berlin (DE)**

(56) Entgegenhaltungen:
**EP-A- 0 086 265     EP-A- 0 178 378**
**EP-A- 0 453 566**

• **LEITHOLF M D ET AL: "MODEL REFERENCE CONTROL OF RUNOUT TABLE COOLING AT LTV" IRON AND STEEL ENGINEER, Bd. 66, Nr. 8, 1.August 1989, Seiten 31-35, XP000069320**

**Beschreibung**

Die Erfindung betrifft ein modellgestütztes Verfahren zur kontrollierten Kühlung in gesteuerten Walz- und Kühlprozessen von Warmband oder Grobblech, das nach gesteuertem Walzen in Temperaturbereichen, in denen keine Rekristallisation stattfindet und in denen das Gefüge aus verfestigtem Austenit besteht, kontrolliert nach einer festgelegten Kühlkurve gekühlt wird, indem es mit einer definierten Geschwindigkeit durch die Kühlanlage transportiert wird.

Ein derartiges Verfahren ist aus "Streißelberger et al., Verfahren zum TM-Behandlung mit beschleunigter Kühlung zur Herstellung von Grobblech aus Baustählen, Stahl u. Eisen 111, 1991, Nr.5 Seiten 65-73" bekannt.

Ziel der Erfindung ist es, bei Veränderungen der Endwalztemperatur FT und der Geschwindigkeit R das gleiche Verhältnis der Gefügephasen wie unter konstanten Prozeßbedingungen mit Hilfe eines metallphysikalischen Prozeßmodells zu gewährleisten.

Dieses Ziel wird erfindungsgemäß durch ein metallphysikalisches Prozeßmodell erreicht modellgestütztes Verfahren gemäß Anspruch 1.

Den wesentlichen Baustein des erfindungsgemäßen Verfahrens bildet das metallphysikalische Prozeßmodell, das eine metallkundliche Kontrolle der Abkühleinrichtungen und eine Verbesserung der Regelung und Steuerung zum Einhalten der geforderten Werkstoffeigenschaften über die Bandlänge ermöglicht.

Erfindungsgemäß wird weiter vorgeschlagen, daß die Position der Kühlkurve bei der Temperatur, bei der die Bildung von Perlit einsetzt (Perlitnase der entsprechenden Kurve) definiert wird durch ein Verhältnis XTAPS zwischen einerseits der Differenz des Zeitlogarithmus, der für die Entstehung von Perlit benötigt wird und dem Zeitlogarithmus, der für die Kühlung des Walzgutes von der Endwalztemperatur auf die Temperatur, bei der die Bildung von Perlit einsetzt (Nasenpunkt) und andererseits der Differenz des Zeitlogarithmus, der für den Beginn der Perlitumwandlung (Nasenpunkt) benötigt wird, und dem Zeitlogarithmus, der für den Beginn der Ferritumwandlung (Nasenpunkt) benötigt wird, wobei dieses Verhältnis XTAPS ist kleiner als 1 und größer als 0 ist.

Die optimale Qualität der mikrolegierten Stähle ist davon abhängig, daß ein sehr feinkörniges Sekundärgefüge bei der Umwandlung des nicht oder nur teilrekristallisierten Austenits innerhalb der Kühlstrecke entsteht, das günstige Eigenschaftskombinationen aufweist. Optimale Werte dieser Verfestigung des Austenits ergeben sich durch 70-80 % Reduktion bei niedrigen Temperaturen (unter 900 °C). Wesentlich dabei ist, daß dieser Verfestigungszustand des umgeformten und verfestigten Austenits bis zur Gamma/Alpha - Umwandlung erhalten bleibt. Die Aufrechterhaltung dieser Verfestigung bis zur Umwandlung ist von den Bedingungen der Ausscheidung der Mikrolegierungselemente und der dadurch verursachten Verzögerung der Rekristallisation abhängig.

Neben der Verfestigung der feinen, austenitischen Körner ist es notwendig, für eine gezielte Kühlung zu sorgen, damit das resultierende Gefüge nach der Umwandlung zum überwiegenden Teil aus Ferrit und Bainit besteht. Perlitische Strukturen sind unerwünscht.

Weiter Merkmale der Erfindung sind in den Unteransprüchen angegeben.

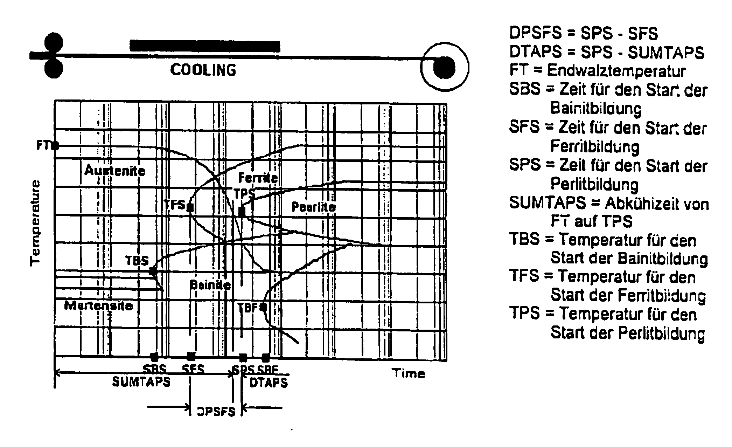

Die Erfindung wird nachfolgend anhand des in der einzigen Zeichnungsfigur dargestellten, berechneten ZTU-Diagramms eines mikrolegierten Stahles bei der kontrollierten Kühlung erläutert

Die Eigenschaften von gewalztem Stahl werden im wesentlichen durch die Abkühlrate im Temperaturbereich zwischen 800 und 500°C beeinflußt. Die Abkühlrate CR (K/s) beeinflußt die Größe des ferritischen Korns und damit die Elastizitätsgrenze. Um eine ausreichende Abkühlrate des Walzgutes zu erreichen und die y/a-Umwandlung im Stahl durchzuführen, wird das Walzgut mit der Endwalztemperatur FT nach Verlassen des letzten Walzgerüsts mit einer Wasserkühlung gekühlt. Die Kühlintensität hängt ab von der aktiven Kühlstreckenlänge L (m) und der Geschwindigkeit R (m/s) des Walzgutes im Bereich der Kühlung. Bezeichnet man die Zeit der Nase der Ferritbildung als SFS, die Zeit der Nase der Perlitbildung als SPS und die Abkühlzeit des Bandes von FT auf die Temperatur der Nase der Perlitbildung TPS als SUMTAPS (s. Bild), ergibt sich als Differenz zwischen dem Zeitpunkt SPS, bei dem die Perlitbildung einsetzt, und der Abkühlzeit SUMTAPS:

$$\ln(DTAPS) = \ln(SPS) - \ln(SUMTAPS)$$

Analog dazu lautet die Differenz zwischen den Zeitpunkten für die Ferrit- und Perlitbildung

$$\ln(DPSFS) = \ln(SPS) - \ln(SFS)$$

Die Position der Kühlkurve zwischen den Zeitpunkten für die Ferrit- und Perlitbildung wird durch den Wert XTAPS charakterisiert:

$$XTAPS = \ln(DTAPS)/\ln(DPSFS)$$

Um eine rein ferritisch-bainitische Struktur zu erhalten, muß XTAPS kleiner als 1 und größer als 0 sein.

Die oben beschriebenen Prozeßbedingungen für die Kühlung beziehen sich auf statische Bedingungen. Im tatsächlichen Walzprozeß ist es jedoch nicht möglich, Abweichungen in den Umformparametern völlig zu vermeiden, insbesondere nicht was die Endwalztemperatur FT und die Geschwindigkeit R betrifft.

Eine erhöhte Endwalztemperatur führt zu einer Abnahme der Verfestigung des Austenits, wodurch gleichzeitig die Zeitpunkte für die Bildung von Ferrit (SFS) bzw. Perlit (SPS) verändert werden. Blieben die voreingestellten Kühlbedingungen aus dem Modell unverändert, würden die geänderten Fertigwalzbedingungen eine Änderung des Wertes von XTAPS bewirken. Das Verhältnis der Gefügephasen von Ferrit und Bainit würde sich ändern, wodurch sich auch die erwarteten Eigenschaften des Bandes ändern würden.

Das Ziel der Erfindung, bei Veränderungen der Endwalztemperatur FT und der Geschwindigkeit R das gleiche Verhältnis der Gefügephasen wie unter konstanten Prozeßbedingungen zu gewährleisten, wird durch das metallphysikalische Prozeßmodell mit dem enthaltenen Werkstoffmodul zur Berechnung von Zeit-Temperatur-Umwandlungs-Diagrammen (ZTU-Diagrammen) in Abhängigkeit der chemischen Zusammensetzung und der Umform- und Kühlparameter erreicht.

Die Kühlanlage wird von einem Computer gesteuert, der u.a. darauf programmiert ist, neue Zeiten für die Bildung von Ferrit und Perlit in Bezug auf die jeweils gemessenen Werte für die Endwalztemperatur FT und die Geschwindigkeit R des Walzgutes aus dem letzten Gerüst zu berechnen. Für diese neuen Bedingungen berechnet der Computer eine neue Abkühlgeschwindigkeit CR sowie die Länge der aktiven Wasserleitung in der Kühlstrecke.

Beide Werte werden so berechnet, daß bei einer Zunahme oder Abnahme der Endwalztemperatur FT und der Geschwindigkeit R die Kühlgeschwindigkeit CR variiert wird. Ändert sich die Endwalztemperatur oder die Geschwindigkeit des Walzgutes, wird die Länge der aktiven Kühlstrecke an ihrem Anfang oder Ende verkürzt oder verlängert, um so die Gesamtkühlzeit an einem die Anlage durchlaufenden Walzgutquerschnitt gleich oder kleiner als die Zeit werden zu lassen, die sich aus der vorab berechneten Differenz zwischen der Temperatur im Einlauf und im Auslauf der Kühlanlage dividiert durch die Kühlgeschwindigkeit CR ergibt. Durch die Kombination der beschriebenen Änderungen von Kühlgeschwindigkeit und Länge der aktiven Kühlstrecke erreicht das Verhältnis XTAPS wenn nicht völlig, so zumindest annähernd den vorab berechneten optimalen Wert.

**Patentansprüche**

1. Modellgestütztes Verfahren zur kontrollierten Kühlung in gesteuerten Walz- und Kühlprozessen von Warmband oder Grobblech, das nach gesteuertem Walzen in Temperaturbereichen, in denen keine Rekristallisation stattfindet und in denen das Gefüge aus verfestigtem Austenit besteht, kontrolliert nach einer festgelegten Kühlkurve gekühlt wird, indem es mit einer definierten Geschwindigkeit durch die Kühlanlage transportiert wird,
**gekennzeichnet durch**
ein metallphysikalisches Prozeßmodell, das mit dem darin enthaltenen Werkstoffmodul Zeit-Temperatur-Umwandlungs-Diagramme (ZTU-Diagramme) in Abhängigkeit der chemischen Zusammensetzung und der Umform- und Kühlparameter berech nicht und das sowohl die Setup-Berechnung zur Ermittlung der erforderlichen Wassermenge und Verteilung innerhalb der Kühlstrecke durchführt, wie auch den dynamischen Führungsgrößenverlauf ermittelt und wobei das Prozeßmodell derart programmiert ist, dass neue Zeiten für die Bildung von Ferrit und Perlit in Bezug auf die jeweils gemessenen Werte für die Endwalztemperatur FT und die Geschwindig keitR des Walzgutes aus dem letzten Gerüst berechnet winden und aus diesen neuen Bedingungen eine neue Abkühlgeschwindigkeit CR sowie die Länge der aktiven Wasserleitung in der Kühlstrecke berechnet wirdwobei die Kühlung derart gesteuert wird, daß die Kühlkurve im berechneten Zeit-Temperatur-Umwandlungs-Diagramm des zu kühlenden Werkstoffes so zwischen den Nasenpunkten der Ferrit- bzw. Perlitumwandlungskurve verläuft, daß sich als Kühlergebnis ein ferritisch-bainitisches Gefüge mit dem jeweils vorab berechneten Verhältnis zwischen diesen beiden Gefügekomponenten im Stahl bildet wobei die Position der Kühlkurve bei der Temperatur, bei der die Bildung von Perlit einsetzt (Perlitnase der entsprechenden Kurve), definiert wird **durch** ein Verhältnis XTAPS zwischen einerseits der Differenz des Zeitlogarithmus, der für die Entstehung von Perlit benötigt wird und dem Zeitlogarithmus, der für die Kühlung des Walzgutes von der Endwalztemperatur auf die Temperatur, bei der die Bildung von Perlit einsetzt (Nasenpunkt) und andererseits der Differenz des Zeitlogarithmus, der für den Beginn der Perlitumwandlung (Nasenpunkt) benötigt wird, und dem Zeitlogarithmus, der für den Beginn der Ferritumwandlung (Nasenpunkt) benötigt wird, wobei dieses Verhältnis XTAPS kleiner als 1 und größer als 0 ist.

2. Modellgestütztes Verfahren zur kontrollierten Kühlung in gesteuerten Walz- und Kühlprozessen von Warmband oder Grobblech nach Anspruch 1,
**dadurch gekennzeichnet,**
**daß** die Kühlgeschwindigkeit in der Kühlanlage bei jeder Erhöhung bzw. Erniedrigung der Endwalztemperatur geändert wird, sofern der voreingestellte Wert der Endwalztemperatur nicht konstant bleibt.

3. Modellgestütztes Verfahren zur kontrollierten Kühlung in gesteuerten Walz- und Kühlprozessen von Warmband oder Grobblech nach Anspruch 1 bis 2,
**dadurch gekennzeichnet,**
**daß** die Kühlgeschwindigkeit in der Kühlanlage bei jeder Zu- bzw. Abnahme der Geschwindigkeit des Walzgutes geändert wird, sofern die tatsächliche Geschwindigkeit des Walzgutes am Auslauf des letzten Gerüsts von dem voreingestellten Wert abweicht.

**4.** Modellgestütztes Verfahren zur kontrollierten Kühlung in gesteuerten Walz- und Kühlprozessen von Warm band oder Grobblech nach einem der Ansprüche 1 bis 3,
**dadurch gekennzeichnet,**
**daß** die aktive Gesamtlänge der Kühlstrecke durch Ab- bzw. Hinzuschalten von Kühleinheiten im vorderen oder hinteren Bereich verkürzt oder verlängert wird, um die Kühlzeit eines die Anlage durchlaufenden Walzgutquerschnittes gleich oder kleiner als die Zeit werden zu lassen, die sich aus der vorausberechneten Differenz zwischen der Temperatur im Einlauf und im Auslauf der Kühlstrecke dividiert durch die Kühlgeschwindigkeit CR ergibt.

**Claims**

**1.** A model-supported method for controlled cooling in controlled rolling and cooling processes for hot strip or plate which after controlled rolling, in temperature ranges in which no recrystallisation occurs and in which the structure consists of hardened austenite, is cooled controlled according to a set cooling curve by being transported at a defined rate through the cooling plant,
**characterised by**
a metal-physical process model which with the material modulus contained therein calculates time/temperature transformation diagrams (TTT diagrams) as a function of the chemical composition and the shaping and cooling parameters, and which performs both the set-up calculation for determining the necessary amount of water and distribution within the cooling section and also determines the dynamic reference input curve, and wherein the process model is programmed such that new times are calculated for the formation of ferrite and pearlite in relation to the values measured in each case for the finishing temperature FT and the speed R of the rolled stock out of the last stand and a new cooling rate CR and also the length of the active water line in the cooling section are calculated from these new conditions, the cooling being controlled such that the cooling curve in the calculated time/temperature transformation diagram of the material to be cooled runs between the nose points of the ferrite or pearlite transformation curve such that as cooling result a ferritic-bainitic structure with the ratio, pre-calculated in each case, between these two structure components forms in the steel, the position of the cooling curve at the temperature at which the formation of pearlite begins (pearlite nose of the corresponding curve) is defined by a ratio XTAPS between on one hand the difference between the time logarithm which is required for the production of pearlite and the time logarithm which [is required] for the cooling of the rolled stock from the finishing temperature to the temperature at which the formation of pearlite begins (nose point) and on the other hand the difference between the time logarithm which is required for the start of the pearlite transformation (nose point), and the time logarithm which is required for the start of the ferrite transformation (nose point), this ratio XTAPS being less than 1 and greater than 0.

**2.** A model-supported method for controlled cooling in controlled rolling and cooling processes of hot strip or plate according to Claim 1,
**characterised in that**
the cooling rate in the cooling plant is changed upon each raising or lowering of the finishing temperature, as long as the pre-set value of the finishing temperature does not remain constant.

**3.** A model-supported method for controlled cooling in controlled rolling and cooling processes of hot strip or plate according to Claims 1 to 2,
**characterised in that**
the cooling rate in the cooling plant is changed upon each increase or decrease in the speed of the rolled stock, as long as the actual speed of the rolled stock at the exit from the final stand deviates from the pre-set value.

**4.** A model-supported method for controlled cooling in controlled rolling and cooling processes of hot strip or plate according to one of Claims 1 to 3,
**characterised in that**
the active overall length of the cooling section is shortened or lengthened by removing or adding cooling units in the front or rear region in order to allow the cooling time of a rolled-stock cross-section passing through the plant to become equal to or less than the time which is yielded by the previously calculated difference between the temperature at the entry to and at the exit from the cooling section divided by the cooling rate CR.

**Revendications**

**1.** Procédé assisté par modèle pour le refroidissement contrôlé dans des processus de laminage et de refroidissement commandés d'un feuillard à chaud ou d'une grosse tôle qui, après laminage commandé dans des plages de températures, dans lesquelles aucune recristallisation n'a lieu et dans lesquelles la structure est constituée d'austénite consolidée, est refroidi(e) de manière contrôlée selon une courbe de refroidissement établie par transport à vitesse définie à travers l'installation de refroidissement,
**caractérisé par**
un modèle de processus s'appuyant sur la physique des métaux qui, avec le module de matériau qui y est contenu, calcule des diagrammes de transformation-température-temps (diagramme TTT) en fonction de la composition chimique et des paramètres de formage et de refroidissement et effectue autant le calcul de réglage pour établir la quantité d'eau nécessaire et la distribution à l'intérieur de la section de refroidissement qu'il n'établit l'évolution dynamique des grandeurs de référence et dans lequel le modèle de processus est programmé de sorte que de nouveaux temps pour la formation de ferrite et de perlite soient calculés par rapport aux valeurs respectivement mesurées pour la température de laminage finale FT et la vitesse R de l'article laminé à partir de la dernière cage et, à partir desquels de ces nouvelles conditions, on calcule une nouvelle vitesse de refroidissement CR et la longueur de la conduite d'eau active dans la section de refroidissement, dans lequel le refroidissement est commandé de sorte que la courbe de refroidissement dans le diagramme de transformation-température-temps calculé du matériau à refroidir s'étende entre les nez des courbes de transformation de la ferrite et de la perlite de manière à former, comme résultat du refroidissement, une structure ferritique-bainitique avec le rapport respectivement calculé précédemment entre ces deux composants de la structure dans l'acier, dans lequel la position de la courbe de refroidissement à la température, à laquelle débute la formation de perlite (nez perlitique de la courbe correspondante), est définie par un rapport XTAPS, d'une part, entre la différence du logarithme de temps qui est nécessaire à la formation de perlite, et du logarithme de temps qui est nécessaire au refroidissement de l'article laminé de la température de laminage finale à la température, à laquelle débute la formation de perlite (nez), et, d'autre part, entre la différence du logarithme de temps qui est nécessaire au début de la transformation de perlite (nez) et du logarithme de temps qui est nécessaire au début de la transformation de ferrite (nez), ce rapport XTAPS étant inférieur à 1 et supérieur à 0.

2. Procédé assisté par modèle pour le refroidissement contrôlé dans des processus de laminage et de refroidissement commandés d'un feuillard à chaud ou d'une grosse tôle selon la revendication 1, **caractérisé en ce que**
la vitesse de refroidissement dans l'installation de refroidissement est modifiée à chaque hausse ou baisse de la température de laminage finale, pour autant que la valeur préréglée de la température de laminage finale ne reste pas constante.

3. Procédé assisté par modèle pour le refroidissement contrôlé dans des processus de laminage et de refroidissement commandés d'un feuillard à chaud ou d'une grosse tôle selon les revendications 1 à 2, **caractérisé en ce que**
la vitesse de refroidissement dans l'installation de

refroidissement est modifiée à chaque augmentation ou diminution de la vitesse de l'article laminé, pour autant que la vitesse réelle de l'article laminé s'écarte de la valeur préréglée à la sortie de la dernière cage.

4. Procédé assisté par modèle pour le refroidissement contrôlé dans des processus de laminage et de refroidissement commandés d'un feuillard à chaud ou d'une grosse tôle selon l'une quelconque des revendications 1 à 3,
**caractérisé en ce que**
la longueur active totale de la section de refroidissement est raccourcie ou allongée par suppression ou addition d'unités de refroidissement dans la zone avant ou arrière pour faire en sorte que le temps de refroidissement d'une section transversale d'article laminé traversant l'installation soit inférieur ou égal au temps qui résulte de la différence précédemment calculée entre la température à l'entrée et à la sortie de la section de refroidissement divisée par la vitesse de refroidissement CR.

**COOLING**

Temperature

FT

Austenite

Ferrite

TFS

TPS

Pearlite

TBS

Bainite

Martensite

TBF

SBS SFS SPS SBF

SUMTAPS

DTAPS

DPSFS

Time

DPSFS = SPS - SFS
DTAPS = SPS - SUMTAPS
FT = Endwalztemperatur
SBS = Zeit für den Start der
    Bainitbildung
SFS = Zeit für den Start der
    Ferritbildung
SPS = Zeit für den Start der
    Perlitbildung
SUMTAPS = Abkühizeit von
    FT auf TPS
TBS = Temperatur für den
    Start der Bainitbildung
TFS = Temperatur für den
    Start der Ferritbildung
TPS = Temperatur für den
    Start der Perlitbildung

EP 0 829 548 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Streißelberger. *Verfahren zum TM-Behandlung mit beschleunigter Kühlung zur Herstellung von Grobblech aus Baustählen,* 1991, 65-73